# EUROPEAN PATENT SPECIFICATION

(11) **EP 4 149 133 B1**
(45) Date of publication and mention of the grant of the patent: **13.05.2026**
(21) Application number: 21814352.7
(22) Date of filing: 27.05.2021
(51) Int. Cl.: H04W 74/0833, H04W 12/00, H04W 12/10, H04W 74/08, H04W 12/033, H04W 12/106, H04W 74/00

(54) **METHOD AND APPARATUS FOR PROCESSING DOWNLINK DATA, AND TERMINAL**
VERFAHREN UND VORRICHTUNG ZUR VERARBEITUNG VON DOWNLINK-DATEN UND ENDGERÄT
PROCÉDÉ ET APPAREIL DE TRAITEMENT DE DONNÉES ENTRANTES, ET TERMINAL

(30) Priority: 29.05.2020 CN 202010479263
(43) Date of publication of application: 15.03.2023
(73) Proprietor: Vivo Mobile Communication Co., Ltd., Dongguan, Guangdong 523863 (CN)
(72) Inventor: WU, Yumin, Dongguan, Guangdong 523863 (CN)
(74) Representative: Carangelo, Pierluigi
(86) International application number: PCT/CN2021/096531
(87) International publication number: WO 2021/239075

(56) References cited:
- EP-A1- 2 874 423
- WO-A1-2019/183852
- CN-A- 101 765 214
- CN-A- 101 765 214
- CN-A- 102 857 920
- CN-A- 102 857 920
- CN-A- 110 291 829
- CN-A- 110 291 829
- CN-A- 111 417 214
- US-A1- 2018 227 851
- US-A1- 2020 413 263

## Description

### TECHNICAL FIELD

The present invention relates to the field of communications more particularly to a downlink data processing method and apparatus, and a terminal.

### BACKGROUND

In the related art, based on a resource configured by a network side, in a case that a user equipment (UE) is in an idle (IDLE) state or an inactive (INACTIVE) state, the UE may directly send small data (Small Data Transmission, SDT) to the network side.

For example, small data is sent to the network side through a message 3 (Msg3) of a 4-step random access process of initial access, or small data is sent to the network side through a message A (MsgA) of a 2-step random access process of initial access, or a dedicated uplink physical uplink shared information (PUSCH) resource (for example, pre-configured PUSCH; or, a PUR (Preallocated Uplink Resource)) configured in a network.

Correspondingly, the network side may directly send small data to the UE in a corresponding method. For example, the network side directly sends small data to the UE through a message 4 (Msg4) of a 4-step random access process of initial access, or the network side directly sends small data to the UE through a message B (MsgB) of a 2-step random access process of initial access, or the network side directly sends small data to the UE through a downlink feedback resource corresponding to a dedicated uplink resource configured by a network.

In a case that the network side sends data to the UE in the foregoing scenarios, no effective solution has been provided for how to ensure the security of the data.

D1 (US2018227851A1) discloses methods and apparatus for optimizing delivery of a data to and/or from a UE in a connected but inactive state. The method includes: receiving downlink data from a serving base station, while the UE is in a state with no dedicated resources allocated to the UE in a network, determining whether to use a set of new security keys derived for the serving base station or a set of stored security keys derived for another base station to decrypt and verify integrity of the downlink data, and processing the downlink data based on the determination.

D2 (WO2019183852A1) discloses an information reporting method and apparatus, a user equipment and a computer-readable storage medium. The information reporting method includes: receiving downlink data of a data radio bearer (DRB), an integrity protection function of which is enabled, and performing an integrity check on the downlink data of the DRB; and if the integrity check fails, triggering reporting integrity check failure related information. The integrity check failure related information includes one or more of the following pieces of information: position information of a UE, a failure indication type being an integrity check failure, indication information of an integrity check failure related information reporting triggering method, and an integrity check failure frequency.

D3 (EP2874423A1) discloses a method for transmitting data, an access point and a station. The method includes: generating a key; sending the key to a station; receiving a downlink data request frame; verifying the downlink data request frame according to the key and obtaining a verification result; sending downlink data to the station if the verification result is that the downlink data request frame is correct. In the embodiments of the present invention, the key is generated, the key is sent to the station, and after the downlink data request frame is received, if the downlink data request frame is verified to be correct according to the key, the downlink data is sent to the station.

D4 (CN101765214A) discloses a random access method as well as a terminal and a communication system thereof. The technical scheme of the invention includes the following: after a random access request is sent by a RRC layer of the terminal, a RRC connection request is directly sent to a RLC layer of the terminal, and the RLC layer receives and caches the RRC connection request; a MAC layer of the terminal obtains the RRC connection request cached in the RLC layer, sends the obtained RRC connection request to a base station and performs subsequent random access procedures.

D5 (CN102857920A) discloses processing method and device for downlink signal messages by a terminal side of an LTE system. The processing method includes receiving a downlink signal message of an RLC sub-layer by a PDCP sub-layer on an LTE terminal side, and judging the type of the message; decoding the message when the type of the message is an order message in a safety mode to acquire safety parameter configuration, performing integrity verification to the order message in the safety mode according to the safety parameter configuration, and activating safety of an access layer after succeed in integrity verification; and decoding and performing integrity verification to subsequent downlink signal messages all coming from the RLC sub-layer according to the PDCP sub-layer according to the safety parameter configuration.

D6 (CN110291829A) discloses methods and apparatus for optimizing delivery of a data to and/or from UE in a connected but inactive state.

### SUMMARY

An objective of embodiments of this application is to provide a downlink data processing method, apparatus, and terminal, so as to ensure the security of data.

According to a first aspect, a downlink data processing method is provided, which is defined in claim 1.

According to a second aspect, a downlink data processing apparatus is provided, which is defined in claim 8.

According to a third aspect, a terminal is provided, which is defined in claim 14.

According to a fourth aspect, a readable storage medium is provided, which is defined in claim 15.

Further advantageous embodiments of the present disclosure are indicated in the dependent claims.

It is to be understood that both the foregoing general description and the following detailed description are exemplary only, and are not restrictive of the present disclosure.

### BRIEF DESCRIPTION OF THE DRAWINGS

Accompanying drawings described herein are used for providing further understanding about the present disclosure, and constitute one portion of the present disclosure. Exemplary embodiments of the present disclosure and descriptions thereof are used for explaining the present disclosure, and do not constitute an inappropriate limitation on the present disclosure. In the drawings:
FIG. 1 is a block diagram of an applicable radio communication system according to an embodiment of this application;
FIG. 2 is a schematic flowchart of a downlink data processing method according to an embodiment of this application;
FIG. 3 is another schematic structural diagram of a downlink data processing apparatus according to an embodiment of this application;
FIG. 4 is a schematic structural diagram of a communication device according to an embodiment of this application; and
FIG. 5 is a schematic diagram of a hardware structure of a terminal according to an embodiment of this application.

### DETAILED DESCRIPTION

The following clearly and completely describes the technical solutions in the embodiments of this application with reference to the accompanying drawings in the embodiments of this application.

It is worth pointing out that the technologies described in the embodiments of this application are not limited to the Long Term Evolution (Long Term Evolution, LTE)/LTE-advanced (LTE-Advanced, LTE-A) systems, and may also be used in other radio communication systems, such as code division multiple access (Code Division Multiple Access, CDMA), time division multiple access (Time Division Multiple Access, TDMA), and frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technologies described can be used for both the foregoing systems and radio technologies, as well as other systems and radio technologies. However, the following description describes a new radio (New Radio, NR) system for example purposes, and uses NR terminology in most of the following description, although these technologies can also be applied to applications other than NR system applications, such as a 6^{th} generation (6^{th} Generation, 6G) communication system.

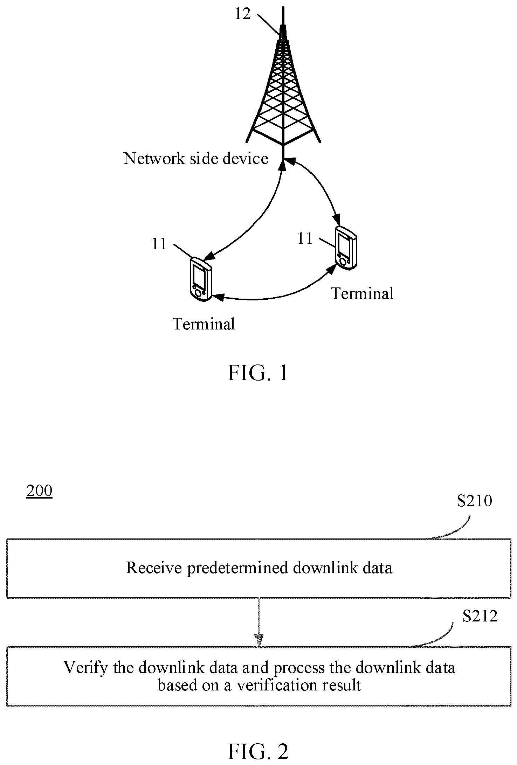

FIG. 1 is a block diagram of an applicable radio communication system according to an embodiment of this application. The radio communication system includes a terminal 11 and a network side device 12. The terminal 11 may also be referred to as a terminal device or a user terminal (User Equipment, UE). The terminal 11 may be terminal side devices such as a mobile phone, a tablet computer (Tablet Personal Computer), a laptop computer (Laptop Computer) or referred to as a notebook computer, a personal digital assistant (Personal Digital Assistant, PDA), a palm computer, a netbook, an ultra-mobile personal computer (ultra-mobile personal computer, UMPC), a mobile Internet device (Mobile Internet Device, MID), a wearable device (Wearable Device), or in-vehicle equipment (VUE), and a pedestrian terminal (PUE). The wearable device includes: a bracelet, a headphone, glasses, and the like. It should be noted that the embodiments of this application are not limited to the specific type of the terminal 11. The network side device 12 may be a base station or a core network, where the base station may be referred to as a node B, an evolved node B, an access point, a base transceiver station (Base Transceiver Station, BTS), a radio base station, a radio transceiver, a basic service set (Basic Service Set, BSS), an extended service set (Extended Service Set, ESS), a B node, an evolved B node (eNB), a home B node, a home evolved B node, a WLAN access point, a WiFi node, a transmitting receiving point (Transmitting Receiving Point, TRP) or other suitable term in the field, as long as the same technical effect is achieved, the base station is not limited to specific technical vocabularies, and it should be noted that, in the embodiments of this application, a base station in the NR system is used as an example only and the specific type of the base station is not limited.

The downlink data processing method provided in the embodiments of this application is described in detail below by using specific embodiments and application scenarios with reference to the accompanying drawings.

FIG. 2 is a schematic flowchart of a downlink data processing method according to an embodiment of this application. A method 200 may be performed by a terminal. In other words, the method may be performed by software or hardware installed on the terminal. As shown in FIG. 2, the method may include the following steps.

S210: Receive predetermined downlink data.

S212: Verify the downlink data and process the downlink data based on a verification result.

In this embodiment of this application, in a case that the terminal receives predetermined downlink data, the terminal verifies the downlink data and processes the downlink data based on a verification result, so that the security of the data can be ensured.

In a possible implementation, the predetermined downlink data may include any of the following:
(1) a Msg4 in a 4-step random access process; for example, data carried in a Msg4 sent by a network side in a 4-step random access process of initial access;
(2) a message B MsgB in a 2-step random access process; for example, data carried in a MsgB sent by a network side in a 2-step random access process of initial access; and
(3) downlink data transmitted on a predetermined downlink feedback resource, where the predetermined downlink feedback resource corresponds to a dedicated uplink resource configured by a network.

In the foregoing possible implementations, the security of receiving (or transmitting) data sent by the network side to the UE through the "Msg4 in a 4-step random access process of initial access", the "MsgB in a 2-step random access process of initial access", or the "downlink feedback resource corresponding to a dedicated uplink resource configured by a network" can be ensured.

In a possible implementation, current status of the terminal may include the following: an idle (IDLE) state and an inactive (INACTIVE, may also be referred to as inactivated) state. In the possible implementation, in a case that the terminal in the idle state or the inactive state receives data directly sent by the network side, the data is verified and the data is processed based on a verification result, so that the security of the data is ensured.

In a possible implementation, a type of predetermined downlink data may include at least one of the following:
(1) data radio bearer (Data Radio Bearer, DRB) data; and
(2) signaling radio bearer (signaling radio bearer, SRB) data.

In other words, in the possible implementation, the predetermined downlink data may include DRB data and/or SRB data.

S212 includes at least one of the following:
(1) performing contention resolution verification on the downlink data and processing the downlink data based on a contention resolution verification result; and
(2) in a case that the downlink data includes both SRB data and DRB data, performing verification processing on the SRB data or the DRB data in the downlink data and processing the downlink data based on a verification processing result.

In a possible implementation, during the contention resolution verification on the downlink data, the contention resolution verification may be performed using contention resolution data included in the downlink data.

For example, in a 2-step random access process, for a terminal in a connected (CONNECTED) state, MsgB contention resolution verification thereof may include: downlink transmission scheduled by cell-radio network temporary identifier (Cell-Radio Network Temporary Identifier, C-RNTI) physical downlink control channel (PDCCH) includes an absolute timing advance command (Absolute Timing Advance Command) media access control layer control element (MAC CE). For a terminal in an idle or inactive state, MsgB contention resolution verification may include: UE contention resolution identity (Contention Resolution Identity) information in a decoding success response (successRAR) of the MsgB matches first 48 bits of an uplink common control channel (UL CCCH) service data unit (SDU) sent thereby.

In a 4-step random access process, for CONNECTED UE, Msg4 contention resolution verification may include: uplink transmission scheduled by C-RNTI PDCCH is a new transmission. For IDLE UE or INACTIVE UE, Msg4 contention resolution verification may include: UE contention resolution identity information in received UE contention resolution identity MAC CE matches first 48 bits of a UL CCCH SDU sent by the terminal.

In the foregoing possible implementation, optionally, after the contention resolution verification of the downlink data succeeds, data content in the downlink data is processed by a high-level protocol entity (i.e. an upper-layer protocol entity) of the terminal; in a case that the contention resolution verification of the downlink data fails, current failure is ignored. Through the possible implementation, the security of receiving of the downlink data can be ensured.

After the contention resolution verification of the downlink data succeeds, the data content of the downlink data is sent to the high-level protocol entity; and the high-level protocol entity processes the data content in the downlink data.

For example, the Msg4 or the MsgB includes data of contention resolution MAC CE and DRB-1 (or LCH-1). The terminal first verifies the contention resolution MAC CE. After verification of the contention resolution MAC CE succeeds, the terminal transfers DRB-1 data (for example MAC SDU-1) corresponding to the contention resolution MAC CE to a high-level protocol entity for processing, where the high-level protocol entity is a radio link control (Radio Link Control, RLC) layer entity and/or a packet data convergence protocol (Packet Data Convergence Protocol, PDCP) layer entity.

The data content of the downlink data is sent to the high-level protocol entity before the contention resolution verification is performed on the downlink data, and the high-level protocol entity does not immediately process the data content of the downlink data after receiving the downlink data, but instead, the high-level protocol entity processes the data content of the downlink data after the contention resolution verification performed on the downlink data succeeds.

For example, the Msg4 or the MsgB includes data of contention resolution MAC CE and DRB-1 (or LCH-1). Before the contention resolution verification is completed, the UE allows the DRB-1 data to be sent to a high-level protocol entity (for example, an RLC and/or a PDCP), but the high-level protocol entity does not process the data packet. In a case that the contention resolution verification succeeds, the high-level protocol entity (for example, the RLC and/or the PDCP) processes the received data content.

Optionally, the high-level protocol entity processing the received data content may include at least one of the following:
(1) performing integrity protection verification on the data content of the downlink data; for example, verifying a MAC-I at a tail of a PDCP protocol data unit (Protocol Data Unit, PDU for short) packet;
(2) decrypting the data content of the downlink data; for example, decrypting content in the PDCP PDU; and
(3) decompressing the data content of the downlink data; for example, performing a robust header compression (Robust Header Compression, ROHC) decompression operation on the content in the PDCP PDU.

In a possible implementation, the performing contention resolution verification on the downlink data and processing the downlink data based on a contention resolution verification result may include: sending data content of the downlink data to a high-level protocol entity for processing and performing the contention resolution verification on the downlink data; and in a case that the high-level protocol entity of the terminal fails to process the data content of the downlink data and the contention resolution verification performed on the downlink data also fails, ignoring a current failure result. In the possible implementation, the UE allows the received data to be processed before the contention resolution. For example, the high-level protocol entity may process the data content after receiving the data content of the downlink data. In a case that processing of the received data fails and the contention resolution verification also fails, the UE ignores a current failure result.

In a possible implementation, the high-level protocol entity processing the received data content may include at least one of the following:
(1) performing integrity protection verification on the data content of the downlink data; for example, verifying a MAC-I at a tail of a PDCP protocol data unit (Protocol Data Unit, PDU for short) packet;
(2) decrypting the data content of the downlink data; for example, decrypting content in the PDCP PDU; and
(3) decompressing the data content of the downlink data; for example, performing a robust header compression (Robust Header Compression, ROHC) decompression operation on the content in the PDCP PDU.

Correspondingly, in a possible implementation, the failing to process the data content of the downlink data may include at least one of the following:
(1) failing to perform integrity protection verification on the data content of the downlink data;
(2) failing to decrypt the data content of the downlink data; and
(3) failing to decompress the data content of the downlink data.

In a possible implementation, the ignoring a current failure result may include at least one of the following:
(1) discarding a data packet of the downlink data; and
(2) skipping performing a failure recovery process. For example, in the related art, for a terminal on which the integrity protection verification fails, the failure recovery process is to enter the IDLE state, and in the possible implementation, the UE in the INACTIVE state does not enter the IDLE state.

In a case that the downlink data includes both SRB data and DRB data, the processing the SRB data or the DRB data in the downlink data and processing the downlink data based on a verification processing result includes: processing the DRB data in the downlink data in a case that the verification processing on the SRB data or the DRB data in the downlink data succeeds.

In a possible implementation, first verification processing is performed on the SRB data, and after the verification processing on the SRB data succeeds, verification processing is performed on the DRB data. Alternatively, first verification is performed on the DRB data first, and after the verification processing on the DRB data succeeds, verification is performed on the DRB data. Therefore, the processing the DRB data in the downlink data in a case that the verification processing on the SRB data or the DRB data in the downlink data succeeds includes:
in a case that verification processing on a first data type data in the downlink data succeeds, performing verification processing on a second data type data in the downlink data, where
the first data type data is the SRB data and the second data type data is the DRB data; or, the first data type data is the DRB data and the second data type data is the SRB data.

In the possible implementations, optionally, in a case that the verification processing on the SRB data or the DRB data in the downlink data fails, a failure recovery process is performed. That is, in the possible implementations, in a case that the verification processing on the SRB data or the verification on the DRB data fails, the failure recovery process is performed without performing verification processing on data of another data type.

Optionally, the verification processing performed on the first data type data includes at least one of the following:
(1) performing integrity protection verification on the first data type data; and
(2) decrypting the first data type data.

Correspondingly, in a possible implementation, the failing to perform verification processing on the first data type data includes at least one of the following:
(1) failing to perform integrity protection verification on the first data type data; and
(2) failing to decrypt the first data type data.

In the possible implementations, performing a failure recovery process may include at least one of the following:
(1) the terminal enters to the IDLE state; for example, the terminal in the INACTIVE state enters to the IDLE state;
(2) discarding a data packet of the first data type data on which the discarding processing fails;
(3) discarding a data packet of the downlink data;
(4) triggering a cell selection or reselection process;
(5) triggering a connection re-establishment process or a connection establishment process; and
(6) falling back context information or configuration information saved by the terminal to a preset state, where the preset state is a state before uplink data corresponding to the downlink data is sent. For example, a terminal in the INACTIVE state generates a new security secret key based on configuration information (for example, an NCC) and uses the security secret key to send data in a Msg3 or a MsgA. In a case that processing of the SRB data fails, the terminal rolls back the security configuration (for example, the NCC) thereof to a state before the Msg3 or the MsgA data is sent. Then, during sending of data next time, the terminal still uses the configuration information (for example, the NCC) to generate a security secret key and send the data.

In the foregoing method provided in this application, in a case that the network side sends data to the UE through the "Msg4 in a 4-step random access process of initial access" or the "MsgB in a 2-step random access process of initial access", or the "downlink feedback resource corresponding to a dedicated uplink resource configured by a network", the UE may receive the data only after performing security verification on the network, so that the security of data reception is ensured.

It should be noted that in the downlink data processing method provided in this embodiment of this application, an execution body may be a downlink data processing apparatus, or a control module configured to perform a downlink data processing method in the downlink data processing apparatus. In an embodiment of this application, for example, the downlink data processing apparatus performs the downlink data processing method, to describe the downlink data processing apparatus provided in this embodiment of this application.

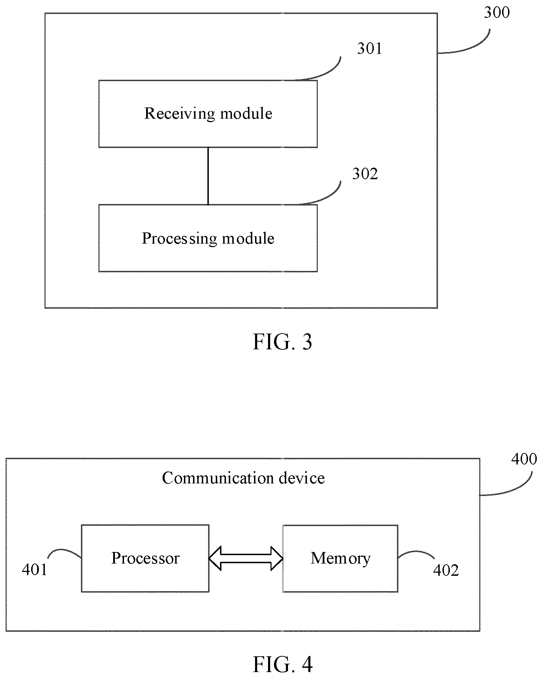

FIG. 3 is a schematic structural diagram of a downlink data processing apparatus according to an embodiment of this application. As shown in FIG. 3, a downlink data processing apparatus 300 may include: a receiving module 301, configured to receive predetermined downlink data; and a processing module 302, configured to verify the downlink data and process the downlink data based on a verification result.

In a possible implementation, the downlink data includes any of the following: a message 4 Msg4 in a 4-step random access process; a message B MsgB in a 2-step random access process; and downlink data transmitted on a predetermined downlink feedback resource, where the predetermined downlink feedback resource corresponds to a dedicated uplink resource configured by a network.

In a possible implementation, a data type of the downlink data includes at least one of the following: data radio bearer DRB data; and signaling radio bearer SRB data.

In a possible implementation, status of the terminal includes any of the following: an idle IDLE state; and an inactive INACTIVE state.

The processing module 302 performs verification on the downlink data, and processing the downlink data based on a verification result, including at least one of the following: performing contention resolution verification on the downlink data, and processing the downlink data based on the contention resolution verification result; in a case that the downlink data includes both SRB data and DRB data, verification processing is performed on the SRB data or DRB data in the downlink data, and the downlink data is processed based on the verification processing result.

In a possible implementation, the processing module 302 performing contention resolution verification on the downlink data and processing the downlink data based on a contention resolution verification result includes: in a case that the contention resolution verification on the downlink data succeeds, processing data content of the downlink data by a high-level protocol entity of the terminal; and in a case that the contention resolution verification on the downlink data fails, ignoring current failure.

The apparatus further includes: a transmission module, configured to send the data content of the downlink data to the high-level protocol entity after the contention resolution verification performed on the downlink data succeeds; or send the data content of the downlink data to the high-level protocol entity before the contention resolution verification is performed on the downlink data.

In a possible implementation, the processing module performing contention resolution verification on the downlink data and processing the downlink data based on a contention resolution verification result includes: sending data content of the downlink data to a high-level protocol entity for processing and performing the contention resolution verification on the downlink data; and in a case that the high-level protocol entity of the terminal fails to process the data content of the downlink data and the contention resolution verification performed on the downlink data also fails, ignoring a current failure result.

In a possible implementation, the processing module 302 ignoring a current failure result includes at least one of the following:
discarding a data packet of the downlink data on which the discarding processing fails; and
skipping performing a failure recovery process.

In a possible implementation, the processing module 302 processing the data content of the downlink data includes at least one of the following:
performing integrity protection verification on the data content of the downlink data;
decrypting the data content of the downlink data; and
decompressing the data content of the downlink data.

In a possible implementation, the processing module 302 failing to process the data content of the downlink data includes at least one of the following:
failing to perform integrity protection verification on the data content of the downlink data;
failing to decrypt the data content of the downlink data; and
failing to decompress the data content of the downlink data.

In a possible implementation, the processing module 302 performing the contention resolution verification on the downlink data includes: performing the contention resolution verification by using contention resolution data included in the downlink data.

The processing module 302 performing verification processing on the SRB data or the DRB data in the downlink data and performing verification processing on the downlink data based on a verification processing result includes: in a case that verification processing on a first data type data in the downlink data succeeds, performing verification processing on a second data type data in the downlink data, where the first data type data is the SRB data and the second data type data is the DRB data; or, the first data type data is the DRB data and the second data type data is the SRB data.

In a possible implementation, the processing module 302 is further configured to perform a failure recovery process in a case that the verification processing on the first data type data in the downlink data fails.

In a possible implementation, the processing module 302 performing verification processing on the first data type data includes at least one of the following: performing integrity protection verification on the first data type data; and decrypting the first data type data.

In a possible implementation, the processing module 302 failing to process the first data type data includes at least one of the following: failing to perform integrity protection verification on the first data type data; and failing to decrypt the first data type data.

In a possible implementation, the processing module 302 performing a failure recovery process includes at least one of the following:
setting the terminal to the IDLE state;
discarding a data packet of the first data type data on which the discarding processing fails;
discarding a data packet of the downlink data;
triggering a cell selection or reselection process;
triggering a connection re-establishment process or a connection establishment process; and
falling back context information or configuration information saved by the terminal to a preset state, where the preset state is a state before uplink data corresponding to the downlink data is sent.

The downlink data processing apparatus in this embodiment of this application may be an apparatus, or may be a component, an integrated circuit, or a chip in a terminal. The apparatus may be a mobile terminal or a non-mobile terminal. Exemplarily, the mobile terminal may include, but is not limited to, the types of the terminal 11 listed above, and the non-mobile terminal may be a server, a network attached storage (Network Attached Storage, NAS), a personal computer (personal computer, PC), a television (television, TV), an automatic teller machine, a self-service machine, and the like, which are not specifically limited in this embodiment of this application.

The downlink data processing apparatus in this embodiment of this application may be an apparatus having an operating system. The operating system may be an Android (Android) operating system, may be an ios operating system, or may be another possible operating system, which is not specifically limited in this embodiment of this application.

The downlink data processing apparatus provided in this embodiment of this application can implement the processes implemented in the method embodiment of FIG. 2, and achieve the same technical effect, which are not repeated herein.

Optionally, as shown in FIG. 4, an embodiment of this application further provides a communication device 400, including a processor 401, a memory 402, a program or instructions stored on the memory 402 and capable of being run on the processor 401. For example, in a case that the communication device 400 is a terminal, the program or the instructions, when executed by the processor 401, implement the processes of the foregoing downlink data processing method embodiment, and in addition, the same technical effect can be achieved, which are not repeated herein in order to avoid duplication.

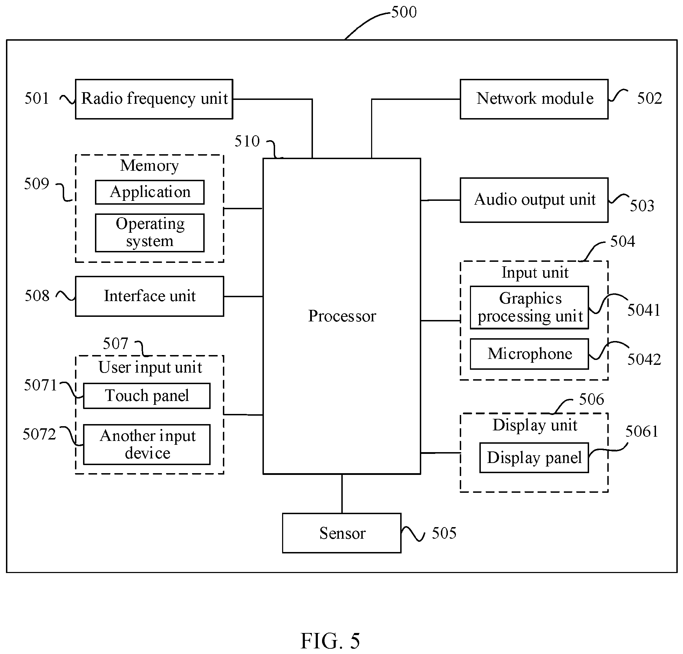

FIG. 5 is a schematic diagram of a hardware structure of a terminal for implementing an embodiment of this application.

The terminal 500 includes, but is not limited to, components such as a radio frequency unit 501, a network module 502, an audio output unit 503, an input unit 504, a sensor 505, a display unit 506, a user input unit 507, an interface unit 508, a memory 509, and a processor 510.

A person skilled in the art may understand that the terminal 500 may further include the power supply (such as a battery) for supplying power to the components. The power supply may be logically connected to the processor 510 by a power management system, thereby implementing functions such as charging, discharging, and power consumption management by using the power management system. The terminal structure shown in FIG. 5 does not constitute a limitation on the terminal, and the terminal may include more or fewer components than shown, or combine some components, or have different component arrangements. Details are not described herein again.

It should be understood that, in this embodiment of this application, the input unit 504 may include a graphics processing unit (Graphics a Processing Unit, GPU) 5041 and a microphone 5042. The graphics processing unit 5041 processes image data of a still picture or a video obtained by an image capture apparatus (such as a camera) in a video capture mode or an image capture mode. The display unit 506 may include a display panel 5061. The display panel 5061 may be configured in a form of a liquid crystal display, an organic light emitting diode, or the like. The user input unit 507 includes a touch panel 5071 and another input device 5072. The touch panel 5071 is also referred to as a touch screen. The touch panel 5071 may include a touch detection apparatus and a touch controller. The another input device 5072 may include, but is not limited to, a physical keyboard, a function key (such as a volume control key, a switch key, or the like), a trackball, a mouse, and an operating lever, which is not described in detail herein.

In this embodiment of this application, the radio frequency unit 501 receives downlink data from a network side device to then send the downlink data to the processor 510 for processing; and in addition, sends uplink data to the network side device. Generally, the radio frequency unit 501 includes, but is not limited to, an antenna, at least one amplifier, a transceiver, a coupler, a low noise amplifier, a duplexer, or the like.

The memory 509 may be configured to store a software program or instruction and various data. The memory 509 may mainly include a program or instruction storage area and a data storage area. The program or instruction storage area may store an operating system, an application program or an instruction required by at least one function (for example, a sound playback function and an image display function), and the like. In addition, the memory 509 may include a high speed random access memory, and may also include a non-volatile memory. The non-volatile memory may be a read-only memory (Read-Only Memory, ROM), a programmable ROM (Programmable ROM, PROM), an erasable programmable read-only memory (Erasable PROM, EPROM), an electrically EPROM (Electrically EPROM, EEPROM), or a flash memory. For example, at least one magnetic disk storage device, a flash memory, or another volatile solid-state storage device.

The processor 510 may include one or more processing units. Optionally, the processor 510 may integrate an application processor and a modem processor. The application processor mainly processes an operating system, a user interface, an application program or an instruction, and the like. The modem processor such as a baseband processor mainly processes wireless communication. It may be understood that, the modem processor may alternatively not be integrated in the processor 510.

The radio frequency unit 501 (write if any) is configured to receive predetermined downlink data; and the processor 510 is configured to verify the downlink data and process the downlink data based on a verification result.

Optionally, the downlink data includes any of the following:
a message 4 Msg4 in a 4-step random access process;
a message B MsgB in a 2-step random access process; and
downlink data transmitted on a predetermined downlink feedback resource, where the predetermined downlink feedback resource corresponds to a dedicated uplink resource configured by a network.

Optionally, a data type of the downlink data includes at least one of the following:
data radio bearer DRB data; and
signaling radio bearer SRB data.

Optionally, status of the terminal includes any of the following:
an idle IDLE state; and
an inactive INACTIVE state.

The processor 510 performing verification processing on the downlink data and processing the downlink data based on a verification result includes at least one of the following:
performing contention resolution verification on the downlink data and processing the downlink data based on a contention resolution verification result; and
in a case that the downlink data includes both SRB data and DRB data, performing verification processing on the SRB data or the DRB data in the downlink data and processing the downlink data based on a verification processing result.

Optionally, the processor 510 performing contention resolution verification on the downlink data and processing the downlink data based on a contention resolution verification result includes:
in a case that the contention resolution verification of the downlink data succeeds, processing data content of the downlink data by a high-level protocol entity of the terminal; or in a case that the contention resolution verification of the downlink data fails, ignoring a current failure.

Before the processor 510 processes the data content of the downlink data by the high-level protocol entity of the terminal, the method further includes:
after the contention resolution verification of the downlink data succeeds, sending the data content of the downlink data to the high-level protocol entity; or
before the performing the contention resolution verification on the downlink data, sending the data content of the downlink data to the high-level protocol entity.

Optionally, the processor 510 performing contention resolution verification on the downlink data and processing the downlink data based on a contention resolution verification result includes: sending data content of the downlink data to a high-level protocol entity for processing and performing the contention resolution verification on the downlink data; and in a case that the high-level protocol entity of the terminal fails to process the data content of the downlink data and the contention resolution verification performed on the downlink data also fails, ignoring a current failure result.

Optionally, the processor 510 ignoring a current failure result includes at least one of the following:
discarding a data packet of the downlink data on which the discarding processing fails; and
skipping performing a failure recovery process.

Optionally, the processor 510 processing the data content of the downlink data includes at least one of the following:
performing integrity protection verification on the data content of the downlink data;
decrypting the data content of the downlink data; and
decompressing the data content of the downlink data.

Optionally, the processor 510 failing to process the data content of the downlink data includes at least one of the following:
failing to perform integrity protection verification on the data content of the downlink data;
failing to decrypt the data content of the downlink data; and
failing to decompress the data content of the downlink data.

Optionally, the processor 510 performing contention resolution verification on the downlink data includes:
performing the contention resolution verification by using contention resolution data included in the downlink data.

The processor 510 performing verification processing on the SRB data or DRB data in the downlink data and processing the downlink data based on a verification processing result includes:
in a case that verification processing on a first data type data in the downlink data succeeds, performing verification processing on a second data type data in the downlink data, where the first data type data is the SRB data and the second data type data is the DRB data; or, the first data type data is the DRB data and the second data type data is the SRB data.

Optionally, the processor 510 is further configured to perform a failure recovery process in a case that the verification processing on the first data type data in the downlink data fails.

Optionally, the processor 510 performing verification processing on the first data type data includes at least one of the following:
performing integrity protection verification on the first data type data; and
decrypting the first data type data.

Optionally, the processor 510 failing to perform verification processing on the first data type data includes at least one of the following:
failing to perform integrity protection verification on the first data type data; and
failing to decrypt the first data type data.

Optionally, the processor 510 performing a failure recovery process includes at least one of the following:
the terminal enters to the IDLE state;
discarding a data packet of the first data type data on which the discarding processing fails;
discarding a data packet of the downlink data;
triggering a cell selection or reselection process;
triggering a connection re-establishment process or a connection establishment process; and
falling back context information or configuration information saved by the terminal to a preset state, where the preset state is a state before uplink data corresponding to the downlink data is sent.

In the foregoing terminal provided in this application, in a case that the network side sends data to the terminal through the "Msg4 in a 4-step random access process of initial access" or the "MsgB in a 2-step random access process of initial access", or the "downlink feedback resource corresponding to a dedicated uplink resource configured by a network", the terminal may receive the data only after performing security verification on the network, so that the security of data reception is ensured.

An embodiment of this application further provides a readable storage medium. The readable storage medium stores a program or instructions. The program or instructions, when executed by a processor, cause the processor to perform the processes of the foregoing downlink data processing method embodiment, and in addition, the same technical effect can be achieved, which are not repeated herein in order to avoid duplication.

The processor is the processor in the terminal described in the foregoing embodiment. The readable storage medium includes a computer-readable storage medium, such as computer read-only memory (Read-Only Memory, ROM), a random access memory (Random Access Memory, RAM), a disk, an optical disk, or the like.

An embodiment of this application further provides a chip. The chip includes a processor and a communication interface. The communication interface is coupled to the processor. The processor is configured to run a terminal program or instructions to implement the processes of the foregoing downlink data processing method embodiments, and in addition, the same technical effect can be achieved, which are not repeated herein in order to avoid duplication.

It should be understood that the chip mentioned in this embodiment of this application may also be referred to as a system-grade chip, a system chip, a chip system, or a system-on-a-chip. It may be understood that the embodiments described in the embodiments of this application may be implemented by hardware, software, firmware, middleware, microcode, or a combination thereof. For hardware implementation, the processing unit may be implemented in one or more application specific integrated circuits (Application Specific Integrated Circuits, ASICs), a digital signal processing (Digital Signal Processing, DSP) unit, a digital signal processing device (DSP Device, DSPD), a programmable logic device (Programmable Logic Device, PLD), a field-programmable gate array(Field-Programmable Gate Array, FPGA), a universal processor, a controller, a microcontroller, a microprocessor, other electronic units configured to perform the functions described in the present invention, or a combination thereof.

For software implementation, the technologies described in the embodiments of this application may be implemented by a module (for example, a process, a function, or the like) that performs the function described in the embodiments of this application. The software code may be stored in the memory and executed by the processor. The memory may be implemented in the processor or outside the processor.

It should be noted that the term " include", "comprise" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the processes, methods, objects, or apparatuses.

Through the descriptions of the foregoing implementations, a person skilled in the art may clearly understand that the methods in the foregoing embodiments may be implemented through software and a necessary general hardware platform, and certainly, may also be implemented by hardware, but in many cases, the former manner is a better implementation. Based on such an understanding, the technical solutions of the present invention essentially, or the part contributing to the prior art, may be presented in the form of a software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in the embodiments of the present invention.

## Claims

1. A downlink data processing method, performed by a terminal (11), wherein the method comprising:
receiving (S210) predetermined downlink data; and
verifying (S212) the downlink data and processing the downlink data based on a verification result;
**characterized in that** the verifying (S212) the downlink data and processing the downlink data based on a verification result comprises at least one of following:
performing contention resolution verification on the downlink data and processing the downlink data based on a contention resolution verification result; and
in a case that the downlink data comprises both signaling radio bearer, SRB, data and data radio bearer, DRB, data, performing verification processing on the SRB data or the DRB data in the downlink data and processing the downlink data based on a verification processing result; wherein
the performing the contention resolution verification on the downlink data and processing the downlink data based on the contention resolution verification result comprises:
after the contention resolution verification of the downlink data succeeds, sending data content of the downlink data to an upper-layer protocol entity, and processing the data content of the downlink data by the upper-layer protocol entity; or
before the performing the contention resolution verification on the downlink data, sending the data content of the downlink data to the upper-layer protocol entity, and processing the data content of the downlink data by the upper-layer protocol entity after the contention resolution verification of the downlink data succeeds; wherein
the upper-layer protocol entity is a radio link control, RLC, layer entity and/or a packet data convergence protocol, PDCP, layer entity;
or,
the performing the verification processing on the SRB data or the DRB data in the downlink data and processing the downlink data based on the verification processing result comprises:
in a case that verification processing on a first data type data in the downlink data succeeds, performing verification processing on a second data type data in the downlink data, wherein
the first data type data is the SRB data and the second data type data is the DRB data; or, the first data type data is the DRB data and the second data type data is the SRB data.

2. The method according to claim 1, wherein the downlink data comprises any of following:
a message 4, Msg4, in a 4-step random access process;
a message B, MsgB, in a 2-step random access process; and
downlink data transmitted on a predetermined downlink feedback resource, wherein the predetermined downlink feedback resource corresponds to a dedicated uplink resource configured by a network.

3. The method according to claim 1, wherein a data type of the downlink data comprises at least one of following:
data radio bearer, DRB, data; and
signaling radio bearer, SRB, data.

4. The method according to claim 1, wherein status of the terminal (11) comprises any of following:
an idle state; and
an inactive state.

5. The method according to any one of claim 1, wherein the processing the data content of the downlink data comprises at least one of following:
performing integrity protection verification on the data content of the downlink data;
decrypting the data content of the downlink data; and
decompressing the data content of the downlink data.

6. The method according to claim 1, wherein in a case that the verification processing on the first data type data in the downlink data fails, a failure recovery process is performed;
the verification processing performed on the first data type data comprises at least one of following:
performing integrity protection verification on the first data type data; and
decrypting the first data type data.

7. The method according to claim 6, wherein performing a failure recovery process comprises at least one of following:
the terminal (11) entering the idle state;
discarding a data packet of the first data type data on which the discarding processing fails;
discarding a data packet of the downlink data;
triggering a cell selection or reselection process;
triggering a connection re-establishment process or a connection establishment process; and
falling back context information or configuration information saved by the terminal (11) to a preset state, wherein the preset state is a state before uplink data corresponding to the downlink data is sent.

8. A downlink data processing apparatus (300), comprising:
a receiving module (301), configured to receive predetermined downlink data; and
a processing module (302), configured to verify the downlink data and process the downlink data based on a verification result; **characterized in that**
the processing module (302) is specifically configured to perform at least one of following:
performing contention resolution verification on the downlink data and processing the downlink data based on a contention resolution verification result; and
in a case that the downlink data comprises both signaling radio bearer, SRB, data and data radio bearer, DRB, data, performing verification processing on the SRB data or the DRB data in the downlink data and processing the downlink data based on a verification processing result; wherein
a transmission module is configured to send data content of the downlink data to an upper-layer protocol entity after the contention resolution verification of the downlink data succeeds, and the processing module (302) is configured to process the data content of the downlink data by the upper-layer protocol entity; or
the transmission module is configured to send the data content of the downlink data to the upper-layer protocol entity before the contention resolution verification is performed on the downlink data, and the processing module (302) is configured to process the data content of the downlink data by the upper-layer protocol entity after the contention resolution verification of the downlink data succeeds; wherein
the upper-layer protocol entity is a radio link control, RLC, layer entity and/or a packet data convergence protocol, PDCP, layer entity;
or,
in a case that verification processing on a first data type data in the downlink data succeeds, the processing module (302) is configured to perform verification processing on a second data type data in the downlink data, wherein the first data type data is the SRB data and the second data type data is the DRB data; or, the first data type data is the DRB data and the second data type data is the SRB data.

9. The downlink data processing apparatus (300) according to claim 8, wherein the downlink data comprises any of following:
a message 4, Msg4, in a 4-step random access process;
a message B, MsgB, in a 2-step random access process; and
downlink data transmitted on a predetermined downlink feedback resource, wherein the predetermined downlink feedback resource corresponds to a dedicated uplink resource configured by a network.

10. The downlink data processing apparatus (300) according to claim 8, wherein a data type of the downlink data comprises at least one of following:
data radio bearer, DRB, data; and
signaling radio bearer, SRB, data.

11. The downlink data processing apparatus (300) according to claim 8, wherein status of the terminal (11) comprises any of following:
an idle state; and
an inactive state.

12. The downlink data processing apparatus (300) according to claim 8, wherein the processing module (302) is specifically configured to perform at least one of following:
performing integrity protection verification on the data content of the downlink data;
decrypting the data content of the downlink data; and
decompressing the data content of the downlink data.

13. The downlink data processing apparatus (300) according to claim 8, wherein
the processing module (302) is further configured to perform a failure recovery process in a case that the verification processing on the first data type data in the downlink data fails; and
the processing module (302) is specifically configured to perform at least one of following:
performing integrity protection verification on the first data type data; and
decrypting the first data type data.

14. A terminal (500), comprising a memory (509), a processor (510), and a program or instructions stored in the memory (509) and executable on the processor (510), wherein when the program or instructions is executed by the processor (510), steps of the method according to any one of claims 1 to 7 are implemented.

15. A readable storage medium, storing a program or instructions, wherein when the program or instructions is executed by a processor (510), steps of the method according to any one of claims 1 to 7 are implemented.

## Patentansprüche

1. Verfahren zur Verarbeitung von Downlink Daten, das von einem Endgerät (11) ausgeführt wird, wobei das Verfahren umfasst:
Empfangen (S210) von vorbestimmten Downlink Daten; und
Verifizieren (S212) der Downlink Daten und Verarbeiten der Downlink Daten basierend auf einem Verifizierungsergebnis;
**dadurch gekennzeichnet, dass** Überprüfen (S212) der Downlink Daten und Verarbeiten der Downlink Daten basierend auf einem Verifizierungsergebnis mindestens eines der folgenden umfasst:
Durchführen einer Verifizierung der Konfliktauflösung an den Downlink Daten und Verarbeiten der Downlink-Daten basierend auf einem Konfliktauflösung-Verifizierungsergebnis; und
in einem Fall, dass die Downlink Daten sowohl Signalisierungsfunkträger, SRB, Daten als auch Datenfunkträger, DRB, Daten umfassen, Durchführen einer Verifizierungsverarbeitung an den SRB Daten oder den DRB Daten in den Downlink Daten und Verarbeiten der Downlink Daten basierend auf einem Verifizierungsverarbeitungsergebnis; wobei
das Durchführen der Verifizierung der Konfliktauflösung an den Downlink Daten und das Verarbeiten der Downlink Daten basierend auf einem Konfliktauflösung-Verifizierungsergebnis umfasst:
nachdem die Verifizierung der Konfliktauflösung an den Downlink Daten erfolgreich ist, Senden eines Dateninhalts der Downlink Daten an eine Protokollentität einer oberen Schicht und Verarbeiten des Dateninhalts der Downlink Daten durch die Protokollentität einer oberen Schicht; oder
vor dem Durchführen der Verifizierung der Konfliktauflösung an den Downlink Daten, Senden des Dateninhalts der Downlink-Daten an die Protokollentität einer oberen Schicht und Verarbeiten des Dateninhalts der Downlink-Daten durch die Protokollentität einer oberen Schicht, nachdem die Verifizierung der Konfliktauflösung an den Downlink Daten erfolgreich ist; wobei
die Protokollentität einer oberen Schicht eine Funkverbindungssteuerung, RLC, Schichtentität und/oder eine Paketdatenkonvergenzprotokoll, PDCP, Schichtentität ist;
oder,
das Durchführen der Verifizierungsverarbeitung an den SRB Daten oder den DRB Daten in den Downlink Daten und das Verarbeiten der Downlink Daten basierend auf einem Verifizierungsverarbeitungsergebnis umfasst:
in einem Fall, dass eine Verifizierungsverarbeitung an Daten eines ersten Datentyps in den Downlink Daten erfolgreich ist, Durchführen einer Verifizierungsverarbeitung an Daten eines zweiten Datentyps in den Downlink Daten, wobei
die Daten des ersten Datentyps die SRB Daten sind und die Daten des zweiten Datentyps die DRB Daten sind; oder die Daten des ersten Datentyps die DRB Daten sind und die Daten des zweiten Datentyps die SRB Daten sind.

2. Verfahren nach Anspruch 1, wobei die Downlink Daten eines der folgenden umfassen:
eine Nachricht 4, Msg4, in einem 4-Schritt-Zufallszugriffsprozess;
eine Nachricht B, MsgB, in einem 2-Schritt-Zufallszugriffsprozess; und
Downlink Daten, die auf einer vorbestimmten Downlink Rückmeldungsressource übertragen werden, wobei die vorbestimmte Downlink Rückmeldungsressource einer dedizierten Uplink Ressource entspricht, die durch ein Netzwerk konfiguriert wird.

3. Verfahren nach Anspruch 1, wobei ein Datentyp der Downlink Daten mindestens eines der folgenden umfasst:
Datenfunkträger, DRB, Daten; und
Signalisierungsfunkträger, SRB, Daten.

4. Verfahren nach Anspruch 1, wobei ein Zustand des Endgeräts (11) eines der folgenden umfasst:
einen Leerlaufzustand; und
einen inaktiven Zustand.

5. Verfahren nach einem der Ansprüche 1, wobei das Verarbeiten des Dateninhalts der Downlink Daten mindestens eines der folgenden umfasst:
Durchführen einer Integritätsschutzverifizierung an dem Dateninhalt der DownlinkDaten;
Entschlüsseln des Dateninhalts der Downlink Daten; und
Dekomprimieren des Dateninhalts der Downlink Daten.

6. Verfahren nach Anspruch 1, wobei in einem Fall, dass die Verifizierungsverarbeitung an den Daten des ersten Datentyps in den Downlink Daten fehlschlägt, ein Fehlerwiederherstellungsprozess durchgeführt wird;
die Verifizierungsverarbeitung, die an den Daten des ersten Datentyps durchgeführt wird, mindestens eines der folgenden umfasst:
Durchführen einer Integritätsschutzverifizierung an den Daten des ersten Datentyps; und
Entschlüsseln der Daten des ersten Datentyps.

7. Verfahren nach Anspruch 6, wobei das Durchführen eines Fehlerwiederherstellungsprozesses mindestens eines der folgenden umfasst:
Eintreten des Endgeräts (11) in den Leerlaufzustand;
Verwerfen eines Datenpakets der Daten des ersten Datentyps, bei dem die Verwerfungsverarbeitung fehlschlägt;
und
Verwerfen eines Datenpakets der Downlink Daten;
Auslösen eines Zellenauswahl- oder Zellenwiederwahlprozesses;
Auslösen eines Verbindungswiederherstellungsprozesses oder eines Verbindungsaufbauprozesses;
Zurücksetzen von Kontextinformationen oder Konfigurationsinformationen, die durch das Endgerät (11) gespeichert werden, auf einen voreingestellten Zustand, wobei der voreingestellte Zustand ein Zustand ist, bevor Uplink Daten, die den Downlink Daten entsprechen, gesendet werden.

8. Vorrichtung zur Verarbeitung von Downlink Daten (300), umfassend:
ein Empfangsmodul (301), das dazu konfiguriert ist, vorbestimmte Downlink Daten; zu empfangen und
ein Verarbeitungsmodul (302), das dazu konfiguriert ist, die Downlink Daten zu verifizieren und die Downlink Daten basierend auf einem Verifizierungsergebnis zu verarbeiten; **dadurch gekennzeichnet, dass**
das Verarbeitungsmodul (302) speziell konfiguriert ist, mindestens eines der folgenden durchzuführen:
Durchführen einer Verifizierung der Konfliktauflösung an den Downlink Daten und Verarbeiten der Downlink Daten basierend auf einem Konfliktauflösung-Verifizierungsergebnis; und
in einem Fall, dass die Downlink Daten sowohl Signalisierungsfunkträger, SRB, Daten als auch Datenfunkträger, DRB, Daten umfassen, Durchführen einer Verifizierungsverarbeitung an den SRB Daten oder den DRB Daten in den Downlink Daten und Verarbeiten der Downlink Daten basierend auf einem Verifizierungsverarbeitungsergebnis; wobei
ein Übertragungsmodul dazu konfiguriert ist, einen Dateninhalt der Downlink Daten an eine Protokollentität einer oberen Schicht zu senden, nachdem die Verifizierung der Konfliktauflösung der Downlink Daten erfolgreich ist, und das Verarbeitungsmodul (302) dazu konfiguriert ist, den Dateninhalt der Downlink Daten durch die Protokollentität einer oberen Schicht zu verarbeiten; oder
das Übertragungsmodul dazu konfiguriert ist, den Dateninhalt der Downlink Daten an die Protokollentität einer oberen Schicht zu senden, bevor die Verifizierung der Konfliktauflösung an den Downlink Daten durchgeführt wird, und das Verarbeitungsmodul (302) dazu konfiguriert ist, den Dateninhalt der Downlink Daten durch die Protokollentität einer oberen Schicht zu verarbeiten, nachdem die Verifizierung der Konfliktauflösung der Downlink Daten erfolgreich ist; wobei
die Protokollentität einer oberen Schicht eine Funkverbindungssteuerungs, RLC, Schichtentität und/oder eine Paketdatenkonvergenzprotokoll, PDCP, Schichtentität ist;
oder,
in einem Fall, dass eine Verifizierungsverarbeitung an Daten eines ersten Datentyps in den Downlink Daten erfolgreich ist, das Verarbeitungsmodul (302) dazu konfiguriert ist, eine Verifizierungsverarbeitung an Daten eines zweiten Datentyps in den Downlink Daten durchzuführen, wobei die Daten des ersten Datentyps die SRB Daten sind und die Daten des zweiten Datentyps die DRB Daten sind; oder die Daten des ersten Datentyps die DRB Daten sind und die Daten des zweiten Datentyps die SRB Daten sind.

9. Vorrichtung zur Verarbeitung von Downlink Daten (300) nach Anspruch 8, wobei die Downlink Daten eines der folgenden umfassen:
eine Nachricht 4, Msg4, in einem 4-Schritt-Zufallszugriffsprozess;
eine Nachricht B, MsgB, in einem 2-Schritt-Zufallszugriffsprozess; und
Downlink Daten, die auf einer vorbestimmten Downlink Rückmeldungsressource übertragen werden, wobei die vorbestimmte Downlink Rückmeldungsressource einer dedizierten Uplink Ressource entspricht, die durch ein Netzwerk konfiguriert wird.

10. Vorrichtung zur Verarbeitung von Downlink Daten (300) nach Anspruch 8, wobei ein Datentyp der Downlink Daten mindestens eines der folgenden umfasst:
Datenfunkträger, DRB, Daten; und Signalisierungsfunkträger, SRB, Daten.

11. Vorrichtung zur Verarbeitung von Downlink Daten (300) nach Anspruch 8, wobei ein Zustand des Endgeräts (11) eines der folgenden umfasst:
einen Leerlaufzustand; und
einen inaktiven Zustand.

12. Vorrichtung zur Verarbeitung von Downlink Daten (300) nach Anspruch 8, wobei das Verarbeitungsmodul (302) speziell dazu konfiguriert ist, mindestens eines der folgenden durchzuführen:
Durchführen einer Integritätsschutzverifizierung an dem Dateninhalt der Downlink Daten;
Entschlüsseln des Dateninhalts der Downlink Daten; und
Dekomprimieren des Dateninhalts der Downlink Daten.

13. Vorrichtung zur Verarbeitung von Downlink Daten (300) nach Anspruch 8, wobei
das Verarbeitungsmodul (302) ferner dazu konfiguriert ist, einen Fehlerwiederherstellungsprozess in einem Fall, dass die Verifizierungsverarbeitung an den Daten des ersten Datentyps in den Downlink Daten fehlschlägt, durchzuführen; und
das Verarbeitungsmodul (302) speziell dazu konfiguriert ist, mindestens eines der folgenden durchzuführen:
Durchführen einer Integritätsschutzverifizierung an den Daten des ersten Datentyps; und
Entschlüsseln der Daten des ersten Datentyps.

14. Endgerät (500), umfassend einen Speicher (509), einen Prozessor (510), und ein Programm oder Anweisungen, die in dem Speicher (509) gespeichert sind und auf dem Prozessor (510) ausgeführt werden können, wobei, wenn das Programm oder die Anweisungen durch den Prozessor (510) ausgeführt werden, Schritte des Verfahrens nach einem der Ansprüche 1 bis 7 implementiert werden.

15. Lesbares Speichermedium, das ein Programm oder Anweisungen speichert, wobei, wenn das Programm oder die Anweisungen durch einen Prozessor (510) ausgeführt werden, Schritte des Verfahrens nach einem der Ansprüche 1 bis 7 implementiert werden.

## Revendications

1. Procédé de traitement de données en liaison descendante, exécuté par un terminal (11), le procédé comprenant :
recevoir (S210) des données de liaison descendante prédéterminées ; et
vérifier (S212) les données de liaison descendante et traiter les données de liaison descendante sur la base d'un résultat de vérification ;
**caractérisé en ce que** la vérification (S212) des données de liaison descendante et le traitement des données de liaison descendante sur la base d'un résultat de vérification comprennent au moins l'un des éléments suivants :
effectuer une vérification de résolution de contention sur les données de liaison descendante et traiter les données de liaison descendante sur la base d'un résultat de vérification de résolution de contention ; et
dans un cas où les données de liaison descendante comprennent à la fois des données de support radio de signalisation, SRB, et des données de support radio de données, DRB, effectuer un traitement de vérification sur les données SRB ou les données DRB dans les données de liaison descendante et traiter les données de liaison descendante sur la base d'un résultat de traitement de vérification ; dans lequel
le fait d'effectuer la vérification de résolution de contention sur les données de liaison descendante et de traiter les données de liaison descendante sur la base du résultat de vérification de résolution de contention comprend :
après que la vérification de résolution de contention des données de liaison descendante réussit, envoyer un contenu de données des données de liaison descendante à une entité de protocole de couche supérieure, et traiter le contenu de données des données de liaison descendante par l'entité de protocole de couche supérieure ; ou
avant d'effectuer la vérification de résolution de contention sur les données de liaison descendante, envoyer le contenu de données des données de liaison descendante à l'entité de protocole de couche supérieure, et traiter le contenu de données des données de liaison descendante par l'entité de protocole de couche supérieure après que la vérification de résolution de contention des données de liaison descendante réussit ; dans lequel
l'entité de protocole de couche supérieure est une entité de couche de contrôle de liaison radio, RLC, et/ou une entité de couche de protocole de convergence de données de paquets, PDCP ;
ou,
le fait d'effectuer le traitement de vérification sur les données SRB ou les données DRB dans les données de liaison descendante et de traiter les données de liaison descendante sur la base du résultat de traitement de vérification comprend :
dans un cas où un traitement de vérification sur des données de premier type de données dans les données de liaison descendante réussit, effectuer un traitement de vérification sur des données de second type de données dans les données de liaison descendante, dans lequel
les données de premier type de données sont les données SRB et les données de second type de données sont les données DRB ; ou, les données de premier type de données sont les données DRB et les données de second type de données sont les données SRB.

2. Procédé selon la revendication 1, dans lequel les données de liaison descendante comprennent l'un quelconque des éléments suivants :
un message 4, Msg4, dans un processus d'accès aléatoire en 4 étapes ;
un message B, MsgB, dans un processus d'accès aléatoire en 2 étapes ; et
des données de liaison descendante transmises sur une ressource de retour de liaison descendante prédéterminée, dans lequel la ressource de retour de liaison descendante prédéterminée correspond à une ressource de liaison montante dédiée configurée par un réseau.

3. Procédé selon la revendication 1, dans lequel un type de données des données de liaison descendante comprend au moins l'un des éléments suivants :
des données de support radio de données, DRB ; et des
données de support radio de signalisation, SRB.

4. Procédé selon la revendication 1, dans lequel un état du terminal (11) comprend l'un quelconque des éléments suivants :
un état fou ; et
un état inactif.

5. Procédé selon l'une quelconque des revendications 1, dans lequel le traitement du contenu de données des données de liaison descendante comprend au moins l'un des éléments suivants :
effectuer une vérification de protection d'intégrité sur le contenu de données des données de liaison descendante ;
déchiffrer le contenu de données des données de liaison descendante ; et
décompresser le contenu de données des données de liaison descendante.

6. Procédé selon la revendication 1, dans lequel dans un cas où le traitement de vérification sur les données de premier type de données dans les données de liaison descendante échoue, un processus de récupération d'échec est effectué ;
le traitement de vérification effectué sur les données de premier type de données comprend au moins l'un des éléments suivants :
effectuer une vérification de protection d'intégrité sur les données de premier type de données ; et
déchiffrer les données de premier type de données.

7. Procédé selon la revendication 6, dans lequel le fait d'effectuer un processus de récupération d'échec comprend au moins l'un des éléments suivants :
le terminal (11) entrant dans l'état fou ;
rejeter un paquet de données des données de premier type de données sur lequel le traitement de rejet échoue ;
rejeter un paquet de données des données de liaison descendante ;
déclencher un processus de sélection ou de re-sélection de cellule;
déclencher un processus de ré-établissement de connexion ou un processus d'établissement de connexion ;
et
revenir des informations de contexte ou des informations de configuration sauvegardées par le terminal (11) à un état prédéfini, dans lequel l'état prédéfini est un état avant que des données de liaison montante correspondant aux données de liaison descendante soient envoyées.

8. Appareil de traitement de données en liaison descendante (300), comprenant :
un module de réception (301), configuré pour recevoir des données de liaison descendante prédéterminées ; et
un module de traitement (302), configuré pour vérifier les données de liaison descendante et traiter les données de liaison descendante sur la base d'un résultat de vérification ; **caractérisé en ce que**
le module de traitement (302) est spécifiquement configuré pour effectuer au moins l'un des suivants :
effectuer une vérification de résolution de contention sur les données de liaison descendante et traiter les données de liaison descendante sur la base d'un résultat de vérification de résolution de contention ; et
dans un cas où les données de liaison descendante comprennent à la fois des données de support radio de signalisation, SRB, et des données de support radio de données, DRB, effectuer un traitement de vérification sur les données SRB ou les données DRB dans les données de liaison descendante et traiter les données de liaison descendante sur la base d'un résultat de traitement de vérification ; dans lequel
un module de transmission est configuré pour envoyer un contenu de données des données de liaison descendante à une entité de protocole de couche supérieure après que la vérification de résolution de contention des données de liaison descendante réussit, et le module de traitement (302) est configuré pour traiter le contenu de données des données de liaison descendante par l'entité de protocole de couche supérieure ; ou
le module de transmission est configuré pour envoyer le contenu de données des données de liaison descendante à l'entité de protocole de couche supérieure avant que la vérification de résolution de contention soit effectuée sur les données de liaison descendante, et le module de traitement (302) est configuré pour traiter le contenu de données des données de liaison descendante par l'entité de protocole de couche supérieure après que la vérification de résolution de contention des données de liaison descendante réussit ; dans lequel
l'entité de protocole de couche supérieure est une entité de couche de contrôle de liaison radio, RLC, et/ou une entité de couche de protocole de convergence de données de paquets, PDCP ;
ou,
dans un cas où un traitement de vérification sur des données de premier type de données dans les données de liaison descendante réussit, le module de traitement (302) est configuré pour effectuer un traitement de vérification sur des données de second type de données dans les données de liaison descendante, dans lequel les données de premier type de données sont les données SRB et les données de second type de données sont les données DRB ; ou, les données de premier type de données sont les données DRB et les données de second type de données sont les données SRB.

9. Appareil de traitement de données en liaison descendante (300) selon la revendication 8, dans lequel les données de liaison descendante comprennent l'un quelconque des éléments suivants :
un message 4, Msg4, dans un processus d'accès aléatoire en 4 étapes ;
un message B, MsgB, dans un processus d'accès aléatoire en 2 étapes ; et
des données de liaison descendante transmises sur une ressource de retour de liaison descendante prédéterminée, dans lequel la ressource de retour de liaison descendante prédéterminée correspond à une ressource de liaison montante dédiée configurée par un réseau.

10. Appareil de traitement de données en liaison descendante (300) selon la revendication 8, dans lequel un type de données des données de liaison descendante comprend au moins l'un des éléments suivants :
des données de support radio de données, DRB ; et
des données de support radio de signalisation, SRB.

11. Appareil de traitement de données en liaison descendante (300) selon la revendication 8, dans lequel un état du terminal (11) comprend l'un quelconque des éléments suivants :
un état fou ; et
un état inactif.

12. Appareil de traitement de données en liaison descendante (300) selon la revendication 8, dans lequel le module de traitement (302) est spécifiquement configuré pour effectuer au moins l'un des éléments suivants :
effectuer une vérification de protection d'intégrité sur le contenu de données des données de liaison descendante ;
déchiffrer le contenu de données des données de liaison descendante ; et
décompresser le contenu de données des données de liaison descendante.

13. Appareil de traitement de données en liaison descendante (300) selon la revendication 8, dans lequel
le module de traitement (302) est en outre configuré pour effectuer un processus de récupération d'échec dans un cas où le traitement de vérification sur les données de premier type de données dans les données de liaison descendante échoue ; et
le module de traitement (302) est spécifiquement configuré pour effectuer au moins l'un des éléments suivants :
effectuer une vérification de protection d'intégrité sur les données de premier type de données ; et
déchiffrer les données de premier type de données.

14. Terminal (500), comprenant une mémoire (509), un processeur (510), et un programme ou des instructions stockés dans la mémoire (509) et exécutables sur le processeur (510), dans lequel lorsque le programme ou les instructions est exécuté par le processeur (510), des étapes du procédé selon l'une quelconque des revendications 1 à 7 sont mises en œuvre.

15. Support de stockage lisible, stockant un programme ou des instructions, dans lequel lorsque le programme ou les instructions est exécuté par un processeur (510), des étapes du procédé selon l'une quelconque des revendications 1 à 7 sont mises en œuvre.
